# EUROPÄISCHE PATENTANMELDUNG

(11) **EP 3 849 076 A1**
(43) Veröffentlichungstag der Anmeldung: **14.07.2021**
(21) Anmeldenummer: 20151103.7
(22) Anmeldetag: 10.01.2020
(51) Int. Cl.: H02P 29/032, H02P 29/60

(54) **SYSTEM UND EIN VERFAHREN ZUR REGELUNG EINER LEISTUNG EINES ELEKTROWERKZEUGS**

(71) Anmelder: Hilti Aktiengesellschaft, 9494 Schaan (LI)
(72) Erfinder: Sattler, Christian, 87640 Biessenhofen (DE)
(74) Vertreter: Hilti Aktiengesellschaft Corporate Intellectual Property

(57) **Zusammenfassung**

Die vorliegende Erfindung betrifft ein System und ein Verfahren zur Regelung einer Leistung eines Elektrowerkzeugs. Ein wesentlicher Vorteil der Erfindung besteht darin, dass mit der Erfindung die Leistung bzw. die Leistungsbegrenzung eines Elektrowerkzeugs in Abhängigkeit von mindestens einem Temperaturwert eingestellt werden kann. Der mindestens eine Temperaturwert wird dabei vorzugsweise an einer Komponente des Leistungspfades des Elektrowerkzeugs gemessen. Dabei handelt es sich vorzugsweise um den Motor und/oder die Leistungselektronik des Elektrowerkzeugs.

## Beschreibung

Die vorliegende Erfindung betrifft ein System und ein Verfahren zur Regelung einer Leistung eines Elektrowerkzeugs. Ein wesentlicher Vorteil der Erfindung besteht darin, dass mit der Erfindung die Leistung bzw. die Leistungsbegrenzung eines Elektrowerkzeugs in Abhängigkeit von mindestens einem Temperaturwert eingestellt werden kann. Der mindestens eine Temperaturwert wird dabei vorzugsweise an einer Komponente des Leistungspfades des Elektrowerkzeugs ermittelt. Dabei handelt es sich vorzugsweise um den Motor und/oder die Leistungselektronik des Elektrowerkzeugs.

### Hintergrund der Erfindung:

Es ist im Stand der Technik bekannt, dass Elektrowerkzeuge in ihrer maximalen Leistung begrenzt werden müssen, um die Komponenten des Elektrowerkzeugs vor einer etwaigen Überlastung zu schützen. Dies gilt insbesondere für die Komponenten im Leistungspfad, wie die Leistungselektronik und den Motor. Besonders wichtig ist dabei, diese für den Betrieb des Elektrowerkzeugs kritischen Komponenten vor einer möglichen Überlastung durch thermische Erwärmung bzw. Überhitzung zu schützen.

Bei konventionellen Elektrowerkzeugen, wie sie aus dem Stand der Technik bekannt sind, wird die Leistungsbegrenzung üblicherweise auf die Dauerleistung bei thermischer Beharrung und auf Raumtemperatur ausgelegt, um die Gerätekomponenten im Dauerbetrieb bei üblichen Bedingungen zu schützen. Im Falle noch nicht erreichter thermischer Beharrung, beispielsweise bei kalten Gerätekomponenten, wird die Leistung auf einen Wert unter dem maximal möglichen Wert begrenzt. Mit anderen Worten ist die Leistungsbegrenzung bei kalten Elektrowerkzeugen größer als sie aufgrund des angestrebten Schutzes der kritischen Komponenten vor Überlastung sein müsste. Mit noch anderen Worten wird durch die bisher übliche Steuerung der Leistung bzw. Leistungsbegrenzung eines Elektrowerkzeugs Leistungspotential des Geräts nicht optimal ausgenutzt.

Die Aufgabe, die der vorliegenden Erfindung zugrunde liegt, besteht daher darin, die vorstehend beschriebenen Nachteile des Standes der Technik zu überwinden und ein Regelungssystem für ein Elektrowerkzeug bereitzustellen, mit dem das Leistungspotential eines Elektrowerkzeugs besser ausgenutzt werden kann. Eine weitere Aufgabe der Erfindung ist es, ein Verfahren zur Regelung einer Leistung eines Elektrowerkzeugs anzugeben, mit dem die zur Verfügung stehende Leistung in einem Elektrowerkzeug besser ausgenutzt wird.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein System zur Regelung einer Leistung eines Elektrowerkzeugs vorgesehen, wobei das Elektrowerkzeug einen Motor und eine Leistungselektronik umfasst. Das System wird im Sinne der Erfindung vorzugsweise auch als Regelungssystem bezeichnet und ist dadurch gekennzeichnet, dass es mindestens einen Temperatursensor umfasst, wobei der mindestens eine Temperatursensor dazu eingerichtet ist, eine Temperatur an dem Motor und/oder der Leistungselektronik des Elektrowerkzeugs zu messen. Das System umfasst darüber hinaus eine Steuervorrichtung, die dazu eingerichtet ist, die Leistung des Elektrowerkzeugs in Abhängigkeit von der ermittelten Temperatur einzustellen, wobei die Steuervorrichtung dem Elektrowerkzeug bei niedrigen Temperaturen eine höhere Leistung bereitstellt als bei höheren Temperaturen.

Das bedeutet vorzugsweise, dass es im Sinne der Erfindung bevorzugt ist, dass die Steuervorrichtung dem Elektrowerkzeug bei höheren Temperaturen höhere Drehzahlen und geringere Drehmomente bereitstellt als bei niedrigeren Temperaturen. Es ist im Sinne der Erfindung insbesondere bevorzugt, dass die Steuervorrichtung dazu eingerichtet ist, die Leistung des Elektrowerkzeugs in Abhängigkeit von der ermittelten Temperatur so einzustellen, dass die Steuervorrichtung dem Elektrowerkzeug bei niedrigen Temperaturen eine höhere Leistung als bei höheren Temperaturen bereitstellt. Eine mögliche Umsetzung der Bereitstellung der höheren Leistung besteht beispielsweise darin, dass die Steuervorrichtung dem Elektrowerkzeug bei niedrigen Temperaturen geringere Drehzahlen und höhere Drehmomente als bei höheren Temperaturen bereitstellt.

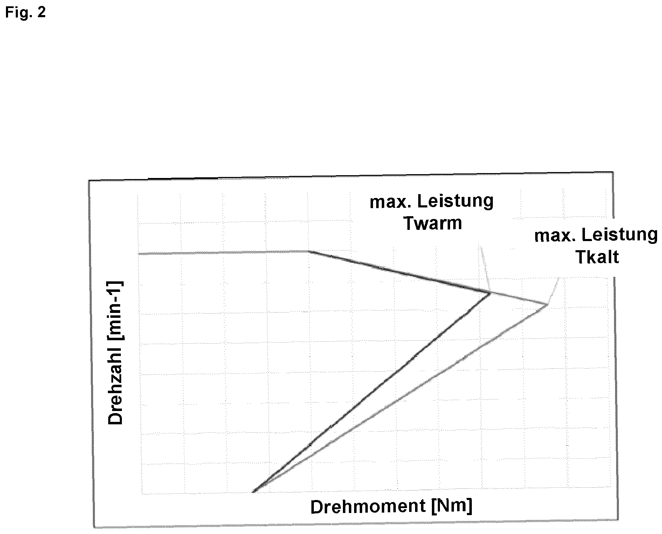

Es ist im Sinne der Erfindung bevorzugt, dass die Leistung eines Elektrowerkzeugs von den physikalischen Größen Drehmoment und Motordrehzahl festgelegt wird. Der Zusammenhang zwischen Drehmoment und Drehzahl kann anhand von Diagrammen nachvollzogen werden, die Kennlinien enthalten (vgl. beispielhafte Darstellung in Fig. 2). Diese Kennlinien ergeben sich aus Punkten des Diagramms, die je einer Drehzahl und einem Drehmoment entsprechen. Die Punkte, die eine Kombination von Drehmoment und Drehzahl angeben, können auch als Arbeitspunkte des Elektrowerkzeugs bzw. seines Motors bezeichnet werden. Durch die vorliegende Erfindung kann die Leistung bzw. die Leistungsbegrenzung des Elektrowerkzeugs an vorherrschende Temperaturbedingungen bzw. einen Temperaturzustand des Elektrowerkzeugs bzw. seiner kritischen Komponenten angepasst werden. Insbesondere ermöglicht die Anwendung der Erfindung eine Verschiebung des Arbeitspunkts bzw. der Kennlinie in einem Drehzahl/Drehmoment-Diagramm. In Fig. 2 ist ein beispielhafter Verlauf einer Kennlinie eines Elektrogeräts für niedrige und hohe Temperaturen gezeigt. Zu sehen ist, dass die maximale Leistung bei niedrigen Temperaturen ("kalt") im Vergleich zu den höheren Temperaturen ("warm") zu höheren Drehmomenten und niedrigeren Motordrehzahlen verschoben ist. Dies zeigt, wie ein Leistungspotential des Elektrowerkzeugs durch die Erfindung besser ausgenutzt werden kann, insbesondere bei kalten Temperaturen und/oder wenn das Elektrowerkzeug noch nicht lange benutzt wurde.

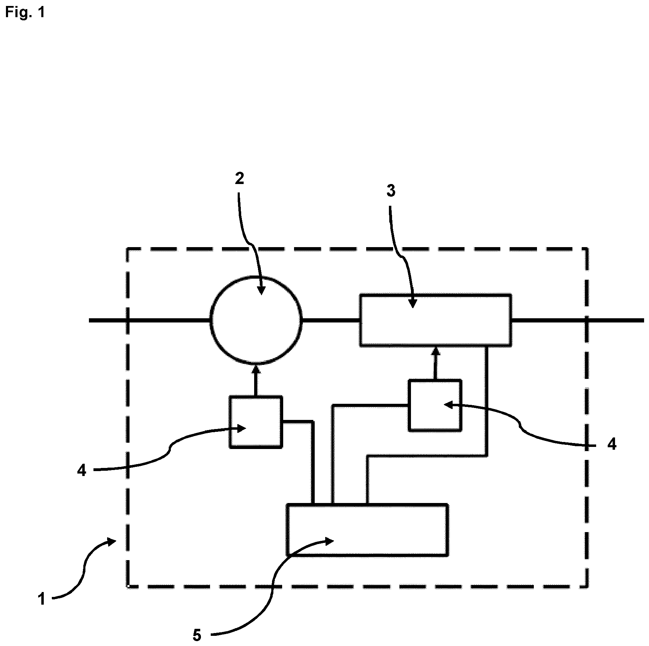

Insbesondere kann durch die Erfindung ein Elektrowerkzeug bereitgestellt werden, mit dem am Anfang seines Betriebs besonders leistungsstark gearbeitet werden kann. Dies wird vorteilhafterweise durch die Verschiebung der Kennlinie bzw. durch die verbesserte Ausnutzung des Leistungspotentials des Elektrowerkzeugs erreicht. Mit anderen Worten ermöglicht das vorgeschlagene Regelungssystem eine angepasste Leistungsbegrenzung in Abhängigkeit von äußeren Bedingungen, wobei die angepasste Leistungsbegrenzung insbesondere die kritischen Komponenten im Leistungspfad betrifft, zum Beispiel Leistungselektronik und Motor des Elektrowerkzeugs. Bei den äußeren Bedingungen kann es sich insbesondere um die Temperatur handeln, die vorzugsweise mit mindestens einem Temperatursensor ermittelt werden kann. Der mindestens eine Temperatursensor ist dazu eingerichtet, eine Temperatur an dem Motor und/ oder der Leistungselektronik des Elektrowerkzeugs zu messen. Der oder die Sensoren sind dazu vorzugsweise in räumlicher Nähe der Komponente angeordnet, deren Temperatur ermittelt werden soll. Beispielsweise können auch zwei Temperatursensoren am Elektrowerkzeug vorgesehen sein, wobei ein erster Sensor dem Motor und ein zweiter Sensor der Leistungselektronik zugeordnet werden kann. Eine solche Ausgestaltung der Erfindung wird in Fig. 1 dargestellt.

Es ist im Sinne der Erfindung bevorzugt, dass die Bedingungen an den kritischen Komponenten mittels Temperatursensoren zur Steuerung der Leistungsbegrenzung erfasst werden. Es kann im Sinne der Erfindung auch bevorzugt sein, dass temperaturabhängige Größen ermittelt werden, die dann analog ausgewertet und weiterverarbeitet werden und zu unterschiedlichen maximalen Leistungswerten Pmax führen bzw. mit diesen verbunden sind. Bei dem Elektrowerkzeug kann es sich vorzugsweise um ein Bohrgerät, ein Kernbohrgerät, einen Trennschleifer, ein Schleifgerät oder ein Schlitzgerät handeln, ohne darauf beschränkt zu sein. Insbesondere können die Werkzeuge dieser Elektrowerkzeuge mit Diamanten, insbesondere Industriediamanten, besetzt sein, um ihre Schneid-, Bohr- oder Trennleistung zu verbessern. Insofern kann die Erfindung beispielsweise in Diamantbohrgeräten, Diamanttrennschleifer, Diamantschleifgeräten oder Diamantschlitzgeräten eingesetzt werden.

Es ist im Kontext der vorliegenden Erfindung vorgesehen, dass die Steuervorrichtung dazu eingerichtet ist, die Leistung des Elektrowerkzeugs in Abhängigkeit von der ermittelten Temperatur einzustellen. Die Steuervorrichtung kann beispielsweise durch eine Auswerteeinheit der Sensorwerte und ein Schaltelement auf der Leistungselektronik gebildet werden. Vorzugsweise ist die Auswerteeinheit dazu eingerichtet, die mit dem mindestens einen Temperatursensor ermittelten Temperaturdaten auszuwerten, zu verarbeiten und/oder weiterzuleiten.

Insbesondere ist es im Sinne der Erfindung bevorzugt, dass die Steuervorrichtung insbesondere dazu eingerichtet ist, eine Leistungsbegrenzung des Elektrowerkzeugs in Abhängigkeit von der ermittelten Temperatur einzustellen. Es ist im Sinne der Erfindung insbesondere bevorzugt, dass die Leistung, die dem Elektrowerkzeug maximal zur Verfügung gestellt wird, in Abhängigkeit von der Temperatur variiert werden kann. Dabei soll dem Elektrowerkzeug bei Beginn der Arbeit mit dem Elektrowerkzeug eine hohe Leistung zur Verfügung gestellt werden, da der Arbeiter zu diesem Zeitpunkt noch frisch und ausgeruht und damit besonders leistungsfähig ist. Im Laufe des Betriebs des Elektrowerkzeugs ist es für den Nutzer akzeptabel, wenn die maximal zur Verfügung stehende Leistung geringer ausfällt als am Anfang des Betriebs, da auch die Leistungsfähigkeit des Nutzers abnimmt. Es ist im Sinne der Erfindung besonders bevorzugt, dass die Leistung des Elektrowerkzeugs von der Steuervorrichtung eingestellt wird. Mit anderen Worten ist die Leistung des Elektrowerkzeugs durch die Steuervorrichtung einstellbar.

Ein wesentlicher Vorteil, der mit der Erfindung erreicht wird, besteht darin, dass dem Nutzer eine höhere Leistung des Elektrowerkzeuges bereitgestellt werden kann, insbesondere zu Beginn seiner Arbeit mit dem Elektrowerkzeug und insbesondere dann, wenn das Elektrowerkzeug und seine Komponenten noch kalt sind. Dadurch kann dem Anwender wahrnehmbar stärkeres Elektrowerkzeug zur Verfügung gestellt werden, insbesondere nach dem ersten Einschalten des Geräts. Tests haben gezeigt, dass Elektrogeräte mit einem vorgeschlagenen Regelungssystem insbesondere bei Dauerbetrieb im unteren Leistungsbereich und/oder bei kurzzeitiger Abforderung der maximalen Leistung als erheblich stärker im Vergleich zu konventionellen Elektrowerkzeugen wahrgenommen werden. Es war vollkommen überraschend, dass eine adaptive Leistungssteuerung, wie sie durch die Erfindung ermöglicht wird, auch bei bürstenlosen Motoren bereitgestellt werden kann, insbesondere wenn die bürstenlosen Motoren bzw. die Elektrowerkzeuge mit einem Akkumulator als Energiequelle betrieben werden. Die Fachwelt war bisher davon ausgegangen, dass die Bereitstellung einer insbesondere temperaturabhängigen Leistungssteuerung für bürstenlose Motoren technisch nicht oder nur schwer realisierbar ist, vor allem in der Kombination mit einem Akkubetrieb des Elektrowerkzeugs.

Um die Leistung bzw. die Leistungsbegrenzung des Elektrowerkzeugs zu steuern, kann es im Sinne der Erfindung bevorzugt sein, mindestens zwei Werte für die Steuerung der maximalen Leistung in Abhängigkeit der Temperatur zu definieren. Dabei kann es sich beispielsweise um Grenzwerte handeln, die jeweils mit einer bestimmten maximalen Leistung verknüpft sind. Bei dem in Fig. 2 dargestellten Ausführungsbeispiel der Erfindung fungieren beispielsweise die Temperaturen "Twarm" und "Tkalt" als solche Grenzwerte bzw. Grenztemperaturen.

Es ist im Sinne der Erfindung besonders bevorzugt, dass die Grenztemperaturen für die maximale Leistung bei unterschiedlichen Temperaturen und/oder Bedingungen an den kritischen Komponenten ermittelt wird. Es ist mit anderen Worten im Sinne der Erfindung bevorzugt, dass einer ersten Grenztemperatur T1 eine erste maximale Leistung Pmax1 zugeordnet wird und einer zweiten Grenztemperatur T2 eine zweite maximale Leistung Pmax2. Vorzugsweise sind sowohl T1 und T2, als auch Pmax1 und Pmax2 voneinander verschieden. Es ist im Sinne der Erfindung bevorzugt, dass die maximale Leistung Pmax1 einer bestimmten Motordrehzahl n1 und einem bestimmten ersten Drehmoment entspricht. Analog ist es bevorzugt, dass die maximale Leistung Pmax2 einer bestimmten Motordrehzahl n2 und einem bestimmten zweiten Drehmoment entspricht. Es ist im Sinne der Erfindung bevorzugt, dass je nach Temperatur, die an dem mindestens einem Temperatursensor ermittelt wird, eine andere maximale Leistung für das Elektrowerkzeug mit der Steuervorrichtung eingestellt bzw. bereitgestellt werden kann. Es ist im Kontext der Erfindung insbesondere vorgesehen, dass die Steuervorrichtung dem Elektrowerkzeug bei niedrigen Temperaturen geringere Drehzahlen und höhere Drehmomente bereitstellt als bei höheren Temperaturen.

Es ist im Sinne der Erfindung bevorzugt, dass die maximalen Leistungswerte, die einer bestimmten Temperatur am Motor und/oder an der Leistungselektronik zugeordnet werden können, werkseitig in dem Elektrowerkzeug eingespeichert oder vorgegeben sind. In einer bevorzugten Ausführungsform der Erfindung kann die Zuordnung von maximaler Leistung und Temperatur auch unter Verwendung eines Potentiometers eingestellt bzw. vorgenommen werden. Vorzugsweise beruhen die werkseitig eingestellten Werte bzw. Wertepaare auf zuvor durchgeführten Messungen, aus denen die Wertepaare Pmax/T abgeleitet werden.

In einem zweiten Aspekt betrifft die Erfindung ein Verfahren zur Regelung einer Leistung eines Elektrowerkzeugs. Das Verfahren ist durch die folgenden Schritte gekennzeichnet:
a) Bereitstellung eines Elektrowerkzeugs mit einem vorgeschlagenen Regelungssystem,
b) Betrieb des Elektrowerkzeugs,
c) Ermittlung mindestens einer Temperatur an dem Elektrowerkzeug,
d) Regelung der Leistung des Elektrowerkzeugs in Abhängigkeit von der unter Schritt c) ermittelten Temperatur,
wobei die Steuervorrichtung des Regelungssystems dem Elektrowerkzeug bei niedrigen Temperaturen eine höhere Leistung bereitstellt als bei höheren Temperaturen. Es ist im Sinne der Erfindung ganz besonders bevorzugt, dass dies insbesondere dadurch erreicht wird, dass die Steuervorrichtung dem Elektrowerkzeug bei niedrigen Temperaturen eine geringere Drehzahl und/oder ein höheres Drehmoment bereitstellt als bei höheren Temperaturen. Die für das Regelungssystem eingeführten Begriffe, Definitionen und technischen Vorteile gelten vorzugsweise für das Regelungsverfahren analog. Insbesondere kann das vorgeschlagene Verfahren auch als Verfahren zur temperaturabhängigen Regelung einer Leistungsbegrenzung eines Elektrowerkzeugs betrachtet werden.

Es ist im Kontext der Erfindung vorgesehen, dass ein Elektrowerkzeug mit einem vorgeschlagenen Regelungssystem bereitgestellt wird. Mit anderen Worten wird ein Elektrowerkzeug bereitgestellt, dass mindestens einen Temperatursensor zur Erfassung einer Temperatur an dem Motor und/oder der Leistungselektronik des Elektrowerkzeugs umfasst. Ferner umfasst das Elektrowerkzeug eine Steuervorrichtung, mit der die Leistung des Elektrowerkzeugs in Abhängigkeit von der zuvor erfassten Temperatur eingestellt bzw. geregelt werden kann. Es kann im Sinne der Erfindung auch bevorzugt sein, dass anstelle der Temperatur temperaturabhängige Größen ermittelt werden, die dann analog zur temperaturabhängigen Leistungssteuerung verwendet werden. Es ist im Kontext der Erfindung vorgesehen, dass das Elektrowerkzeug betrieben wird, wobei vorzugsweise kontinuierlich die Temperatur an den kritischen Komponenten des Leistungspfads gemessen wird. Die Formulierung "an dem Elektrowerkzeug" in Schritt c) des Verfahren wird im Sinne der Erfindung bevorzugt so verstanden, dass die Messung der Temperatur an den kritischen Komponenten des Leistungspfads, beispielsweise Leistungselektronik und/ oder Motor, des Elektrowerkzeugs erfolgt.

In einem nächsten Schritt kann die Steuervorrichtung dann die Leistung des Elektrowerkzeugs in Abhängigkeit von zuvor ermittelten Temperatur einstellen bzw. regeln. Diese Regelung erfolgt vorteilhafterweise dergestalt, dass die Steuervorrichtung dem Elektrowerkzeug bei niedrigen Temperaturen geringere Drehzahlen und höhere Drehmomente bereitstellt als bei höheren Temperaturen.

In einem weiteren Aspekt kann die Erfindung ein Elektrowerkzeug betreffen, das ein vorgeschlagenes Regelungssystem aufweist bzw. das mit dem vorgeschlagenen Verfahren zur Regelung der Leistung des Elektrowerkzeugs betrieben werden kann.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: schematische Darstellung einer bevorzugten Ausgestaltung der Erfindung
- Fig. 2: Leistungs-Diagramm für ein Elektrowerkzeug mit Drehmoment und Drehzahl

### Ausführungsbeispiele:

Figur 1 zeigt eine schematische Darstellung einer bevorzugten Ausgestaltung der Erfindung. Dargestellt ist schematisch ein Elektrowerkzeug (1) mit einem Motor (2) und einer Leistungselektronik (3). Innerhalb des Elektrogeräts (1) können ein oder mehrere Temperatursensoren (4) vorgesehen sein, mit denen die Temperatur beispielsweise am Motor (2) und/oder an der Leistungselektronik (3) des Elektrowerkzeugs (3) gemessen werden kann. Die so ermittelte Temperatur kann im Rahmen des vorgeschlagenen Steuerungs- bzw. Regelungsverfahrens dazu verwendet werden, in Abhängigkeit von der Temperatur eine maximale Leistung am Elektrowerkzeug (1) einzustellen. Die Temperatursensoren (4) können zusammen mit einer Steuervorrichtung (5), die ebenfalls Bestandteil des Elektrowerkzeugs (1) ist, ein Regelungssystem bilden. Die Erfindung ermöglicht es insbesondere, dass die Steuervorrichtung (5) des Regelungssystems eine maximale Leistung für das Elektrowerkzeug (1) bzw. seinen Motor (2) in Abhängigkeit von der Temperatur bereitstellt. Es ist im Sinne der Erfindung bevorzugt, dass die in Fig. 1 nach links vom Motor (2) fortweisende Linie den Leistungsausgang darstellt, während die rechts von der Leistungselektronik (3) fortweisende Linie den Leistungseingang markiert.

Fig. 2 zeigt ein Leistungs-Diagramm für ein Elektrowerkzeug mit Drehmoment und Drehzahl. Insbesondere zeigt das in Fig. 2 abgebildete Diagramm, wie sich die Drehzahl in Relation zum Drehmoment verhält. Das Drehmoment ist dabei auf einer horizontalen Achse aufgetragen, während die Drehzahl auf einer vertikalen Achse aufgetragen ist. Das in Fig. 2 abgebildete Diagramm zeigt zwei unterschiedliche Verläufe von Kennlinien, wobei der eine Verlauf einer maximalen Leistung bei kalten Temperaturen entspricht und der andere Verlauf einer maximalen Leistung bei warmen Temperaturen. Zu erkennen ist die Verschiebung der Kennlinie bei niedrigen Temperaturen hin zu höheren Drehmomenten und niedrigeren Drehzahlen im Vergleich zu der Kennlinie für höhere Temperaturen.

### Bezugszeichenliste

- 1: Elektrowerkzeug
- 2: Motor
- 3: Leistungselektronik
- 4: Temperatursensor
- 5: Steuervorrichtung

## Patentansprüche

1. System zur Regelung einer Leistung eines Elektrowerkzeugs (1), wobei das Elektrowerkzeug (1) einen Motor (2) und eine Leistungselektronik (3) umfasst **dadurch gekennzeichnet, dass**
das System
- mindestens einen Temperatursensor (4) umfasst, wobei der mindestens eine Temperatursensor (4) dazu eingerichtet ist, eine Temperatur an dem Motor (2) und/oder der Leistungselektronik (3) des Elektrowerkzeugs (1) zu messen, sowie
- eine Steuervorrichtung (5), die dazu eingerichtet ist, die Leistung des Elektrowerkzeugs (1) in Abhängigkeit von der ermittelten Temperatur einzustellen, wobei die Steuervorrichtung (5) dem Elektrowerkzeug (1) bei niedrigen Temperaturen eine höhere Leistung bereitstellt als bei höheren Temperaturen.

2. Verfahren zur Regelung einer Leistung eines Elektrowerkzeugs (1), wobei das Verfahren **durch die folgenden Schritte gekennzeichnet** ist:
a) Bereitstellung eines Elektrowerkzeugs (1) mit einem Regelungssystem gemäß Anspruch 1,
b) Betrieb des Elektrowerkzeugs (1),
c) Ermittlung mindestens einer Temperatur an dem Elektrowerkzeug (1),
d) Regelung der Leistung des Elektrowerkzeugs (1) in Abhängigkeit von der unter Schritt c) ermittelten Temperatur,
wobei die Steuervorrichtung (5) des Regelungssystems dem Elektrowerkzeug (1) bei niedrigen Temperaturen eine höhere Leistung bereitstellt als bei höheren Temperaturen.
